# EUROPÄISCHE PATENTANMELDUNG

(11) **EP 2 200 269 A1**
(43) Veröffentlichungstag der Anmeldung: **23.06.2010**
(21) Anmeldenummer: 09014420.5
(22) Anmeldetag: 18.11.2009
(51) Int. Cl.: H04N 3/36, H04N 5/253

(54) **Filmscanner**

(30) Priorität: 17.12.2008 DE 102008062664
(71) Anmelder: ARNOLD & RICHTER CINE TECHNIK GMBH & CO. BETRIEBS KG, 80799 München (DE)
(72) Erfinder: Cieslinski, Michael, 85521 Ottobrunn (DE)
(74) Vertreter: Manitz, Finsterwald & Partner GbR

(57) **Zusammenfassung**

Ein Filmscanner zum optischen Abtasten eines Laufbildfilms, der in Längsrichtung eine Folge von mehreren Bildbereichen und zumindest eine Reihe von mehreren Perforationslöchern aufweist, insbesondere eines Laufbildfilms des Typs 16 mm oder 35 mm, mit einem Bildsensor zum Erfassen zumindest eines jeweiligen Bildbereichs des Laufbildfilms, um ein entsprechendes Abtastbild zu erzeugen, und mit einer Auswerteeinheit zum Auswerten des Abtastbildes, um ein Bildstandkorrektursignal zu erzeugen, ist **dadurch gekennzeichnet, dass** der Bildsensor zum zusätzlichen Erfassen lediglich eines jeweiligen Teilbereichs von Perforationslöchern in der Umgebung des erfassten Bildbereichs des Laufbildfilms ausgebildet ist, wobei die Auswerteeinheit dazu ausgebildet ist, eine Position des erfassten Teilbereichs wenigstens eines Perforationslochs zu ermitteln und das Bildstandkorrektursignal auf der Grundlage der wenigstens einen ermittelten Teilbereichsposition zu erzeugen. Ferner ist ein entsprechendes Verfahren angegeben.

## Beschreibung

Die Erfindung betrifft einen Filmscanner und ein Verfahren zum optischen Abtasten eines Laufbildfilms.

Ein derartiger Filmscanner dient zum Abtasten der Bildinformation eines belichteten Films, beispielsweise zum Zwecke einer digitalen Nachbearbeitung. Hierfür ist üblicherweise eine Transmissions- bzw. Durchlichtanordnung vorgesehen, wobei das abzutastende Filmmaterial auf der einen Seite beleuchtet wird und auf der anderen Seite eine Empfangsoptik und ein Lichtempfänger angeordnet sind.

Der Laufbildfilm wird in einem derartigen Filmscanner intermittierend transportiert, um die einzelnen belichteten Bildbereiche, d.h. die aufeinander folgenden Einzelbildausschnitte, nacheinander zu beleuchten und optisch abzutasten. Hierbei ist es erwünscht, eine Sequenz von aufeinander folgenden Bildbereichen ohne Bildversatz abzutasten, insbesondere ohne horizontalen Bildversatz (Weave) und ohne vertikalen Bildversatz (Jitter). Die Bildbereiche sollen also in gleich bleibender Relativlage bezüglich der Filmbahn und bezüglich des Gesichtsfelds des Lichtempfängers des Filmscanners erfasst werden, um bei einem späteren Abspielen der abgetasteten Bildersequenz ein "Ruckeln" zu vermeiden.

Zu diesem Zweck ist es beispielsweise für einen Laufbildfilm des Typs 35 mm bekannt, die Position des Laufbildfilms in einer Ruhestellung zwischen zwei Transportbewegungen exakt zu fixieren, wobei üblicherweise Sperrgreiferstifte in die Perforationslöcher eingreifen, die an den beiden Längsseiten des Films vorgesehen sind und zum Transport des Films mittels einer Zahntrommel dienen. Eine derartige mechanische Registrierung führt jedoch zu einer unerwünschten Abnutzung der Perforationslöcher. Gealtertes Filmmaterial kann geschrumpft oder aber sehr brüchig sein, sodass es bei der Einführung der Registrierstifte in die Perforationslöcher beschädigt werden kann. Schnitt- und Klebestellen können zudem verhindern, dass die mechanische Registrierung mit Hilfe von Sperrgreiferstiften mit der gewünschten Genauigkeit funktioniert.

Ein weiterer Nachteil bei Filmscannern mit intermittierendem Filmtransport und mechanischer Registrierung liegt in einer im Vergleich mit Film-scannern mit kontinuierlichem Filmtransport geringeren Geschwindigkeit, da der Filmtransport, die mechanische Registrierung und die Abtastung nacheinander erfolgen müssen. Dies führt dazu, dass nur etwa 8 bis 10 Bilder pro Sekunde abgetastet werden können, sodass sich die Dauer des Abtastvorgangs etwa auf das Dreifache gegenüber der ursprünglichen Laufzeit des Films erhöht.

Es ist bekannt, die tatsächliche Bildlage nach kapazitiven oder optischen Methoden zu erfassen und eine entsprechende Nachpositionierung des Bildes oder eine nachträgliche elektronische Bildstandkorrektur vorzunehmen. So offenbart DE 10 2005 042 136 A1 einen Filmscanner, der zusätzlich zu dem Lichtempfänger zum Erzeugen der Abtastbilder einen separaten Bildsensor aufweist, der lediglich die Perforationslöcher abtastet. Eine derartige Anordnung ist baulich jedoch unerwünscht aufwendig. Außerdem besteht bei der Verwendung von zusätzlichen Sensoren die Notwendigkeit, diese relativ zum Hauptbildsensor zu justieren.

Es ist Aufgabe der Erfindung, bei einem Filmscanner einen Bildversatz beim optischen Abtasten eines Laufbildfilms auf kostengünstige Weise und mit hoher Genauigkeit zu vermeiden.

Diese Aufgabe wird durch einen Filmscanner mit den Merkmalen des Anspruchs 1 gelöst, und insbesondere durch einen Filmscanner zum optischen Abtasten eines Laufbildfilms, der in Längsrichtung eine Folge von mehreren Bildbereichen und zumindest eine Reihe von mehreren Perforationslöchern aufweist, insbesondere eines Laufbildfilms des Typs 16 mm oder 35 mm, mit einem Bildsensor zum Erfassen zumindest eines jeweiligen Bildbereichs des Laufbildfilms, um ein entsprechendes Abtastbild zu erzeugen und mit einer Auswerteeinheit zum Auswerten des Abtastbildes, um ein Bildstandkorrektursignal für das Abtastbild zu erzeugen. Der Filmscanner ist **dadurch gekennzeichnet, dass** der Bildsensor zum zusätzlichen Erfassen lediglich eines jeweiligen Teilbereichs von Perforationslöchern in der Umgebung des erfassten Bildbereichs des Laufbildfilms ausgebildet ist, wobei die Auswerteeinheit dazu ausgebildet ist, eine Position des erfassten Teilbereichs wenigstens eines Perforationslochs zu ermitteln und das Bildstandkorrektursignal auf der Grundlage der wenigstens einen ermittelten Teilbereichsposition zu erzeugen.

Bei einem erfindungsgemäßen Filmscanner werden also Teilbereiche von Perforationslöchern mit demselben Bildsensor erfasst, mit dem auch das entsprechende Abtastbild erzeugt wird. Dem liegt die Erkenntnis zugrunde, dass es für eine zuverlässige Erzeugung des Bildstandkorrektursignals nicht notwendig ist, die gesamte Breite des Laufbildfilms zu erfassen. Vielmehr muss das Bildfeld des Bildsensors nur so groß gewählt werden, dass ein Teilbereich, insbesondere ein dem erfassten Bildbereich zugewandter Teilbereich, der Perforationslöcher erfasst wird. Das Bildstandkorrektursignal kann dann zum Beispiel aus der Abweichung der ermittelten Position des Teilbereichs des wenigstens einen Perforationslochs von einer entsprechenden Bezugs- oder Referenzposition erzeugt werden. Anhand des erzeugten Bildstandkorrektursignals kann für jeden abgetasteten Bildbereich eine elektronische Bildstandkorrektur durchgeführt werden. Dies kann innerhalb des Filmscanners oder nachträglich außerhalb des Filmscanners geschehen.

Beispielsweise beträgt bei einem 35-mm-Film das zum Erfassen der Bildbereiche erforderliche Bildfeld des Bildsensors in horizontaler Richtung 25 mm. Es müsste auf 31 mm vergrößert werden, wenn die Perforationslöcher vollständig im Bild sichtbar sein sollten. Gemäß der Erfindung ist es bei einem Filmscanner zur Abtastung des beispielhaft genannten 35-mm-Films jedoch ausreichend, das Bildfeld in horizontaler Richtung auf 28 mm zu vergrößern, sodass ein entsprechend kleiner und damit kostengünstiger Bildsensor verwendet werden kann.

Ein weiterer Vorteil besteht darin, dass auch die Optik für ein kleineres Bildfeld ausgelegt sein kann, woraus sich ebenfalls ein Kostenvorteil ergibt. Zudem wird weniger unerwünschtes Streulicht erzeugt und das Ausleuchten des Films vereinfacht sich. Schließlich steht bei dem erfindungsgemäßen Filmscanner eine größere Andruckfläche für den Film in der Filmbühne zur Verfügung, wodurch sich die Planität des Films und damit die Bildschärfe der Abtastbilder erhöhen.

Der Einsatz des erfindungsgemäßen Filmscanners ist nicht auf 35-mm-Film beschränkt, sondern kann auch bei anderen Filmformaten, beispielsweise bei 16-mm-Filmen, zum Einsatz gelangen. Weiterhin können sowohl Filme gescannt werden, bei denen Perforationslöcher auf beiden Seiten des Bildbereichs vorgesehen sind, als auch Filme, die nur auf einer Seite des Bildbereichs mit Perforationslöchern versehen sind, wie zum Beispiel Super-16-Filme.

Gemäß einer bevorzugten Ausführungsform der Erfindung ist der erfasste Teilbereich der Perforationslöcher durch das Bildfeld des Bildsensors begrenzt.

Weiterhin kann der erfasste Teilbereich der Perforationslöcher durch eine Maske begrenzt sein, insbesondere durch eine Filmbühne des Filmscanners. Die Maske kann auch ein Bestandteil der Filmbühne sein.

Bevorzugt ist die Auswerteeinheit dazu ausgebildet, auf der Grundlage der wenigstens einen ermittelten Teilbereichs-Position eine Positionsabweichung von einem Sollwert der Position des jeweiligen Perforationsloch-Teilbereichs zu ermitteln, wobei das Bildstandkorrektursignal der ermittelten Positionsabweichung oder eine Kombination mehrerer der für einen Bildbereich ermittelten Positionsabweichungen entspricht. Es wird also jeweils für ein Perforationsloch eine Abweichung der zuvor ermittelten Position eines Teilbereichs dieses Perforationslochs von einem vorgegebenen Sollwert ermittelt. Im Fall der Erfassung der Teilbereiche von mehreren Perforationslöchern für einen Bildbereich kann die Kombination beispielsweise durch Mittelwertbildung über die Positionsabweichungen erfolgen. Es ist auch möglich, wenigstens einen Extremwert der ermittelten Teilbereichs-Positionen, beispielsweise das größte und das kleinste Einzelergebnis, bei der Erzeugung des Bildstandkorrektursignals unberücksichtigt zu lassen, um bei der Erzeugung des Bildstandkorrektursignals eine höhere Genauigkeit zu erzielen.

Vorzugsweise ist die Auswerteeinheit dazu ausgebildet, die Position des erfassten Teilbereichs des jeweiligen Perforationsloches auf der Grundlage der Position des Flächenschwerpunkts des erfassten Teilbereichs zu ermitteln. Auf diese Weise lassen sich sowohl ein horizontaler wie auch ein vertikaler Bildversatz ermitteln. Die Position des Flächenschwerpunkts wird beispielsweise durch Bildung des Flächenintegrals ermittelt. Die Ermittlung der Position des erfassten Teilbereichs des jeweiligen Perforationsloches erfolgt dann analytisch durch eine entsprechende Formel oder mittels einer Nachschlagtabelle. In Abhängigkeit von der Form der Perforationslöcher kann zwischen der jeweiligen Teilbereichs-Position und dem Flächenschwerpunkt ein linearer Zusammenhang oder ein nicht-linearer Zusammenhang bestehen.

Bei einer bevorzugten Ausführungsform der Erfindung ist die Auswerteeinheit zum Ermitteln der Fläche des erfassten Teilbereichs des wenigstens einen Perforationslochs ausgebildet, wobei die Auswerteeinheit zum Ermitteln der Position des erfassten Teilbereichs des wenigstens einen Perforationslochs auf der Grundlage der Fläche des erfassten Teilbereichs ausgebildet ist. Hierbei wird ausgenutzt, dass der Zusammenhang zwischen der Fläche des erfassten Teilbereichs und einem Bildversatz nur von der Form des Perforationslochs abhängt. Für eine vorbestimmte Form der Perforationslöcher kann also zum Beispiel eine Formel angegeben werden, mittels der die Position des erfassten Teilbereichs auf der Grundlage der Fläche dieses Teilbereichs berechnet werden kann. Die Form der Perforationslöcher eines abzutastenden Laufbildfilms kann hierfür zu Beginn des Abtastprozesses entweder automatisch erkannt werden oder manuell ausgewählt werden, insbesondere auf Grundlage einer gespeicherten Nachschlagtabelle.

Alternativ zu der Verwendung der vorgenannten Formel kann in der Auswerteeinheit eine Nachschlagtabelle gespeichert sein, in welcher für eine Vielzahl von Werten der Fläche des erfassten Teilbereichs einem jeweiligen Wert der Fläche ein Wert der Position des erfassten Teilbereichs zugeordnet ist. Für Zwischenwerte kann der Wert der Position durch Interpolation ermittelt werden.

Gemäß einer weiteren vorteilhaften Ausführungsform ist die Auswerteeinheit zum Ermitteln der Fläche und des Umfangs des erfassten Teilbereichs des wenigstens einen Perforationslochs ausgebildet, wobei in der Auswerteeinheit eine Nachschlagtabelle gespeichert ist, in welcher einem jeweiligen Wert der Fläche ein Sollwert des Umfangs des erfassten Teilbereichs zugeordnet ist, wobei die Auswerteeinheit zum Ermitteln einer Abweichung des ermittelten Umfangs von dem zugeordneten Sollwert ausgebildet ist, und wobei die Auswerteeinheit dazu ausgebildet ist, eine ermittelte Position des erfassten Teilbereichs des jeweiligen Perforationslochs hinsichtlich der Erzeugung des Bildstandkorrektursignals unberücksichtigt zu lassen, falls für diese ermittelte Teilbereichs-Position die ermittelte Abweichung des Umfangs einen Grenzwert überschreitet. Hierbei erfolgt die Ermittlung der Position des erfassten Teilbereichs ebenfalls auf der Grundlage der Fläche dieses Teilbereichs. Für diesen Wert der Fläche wird in der Nachschlagtabelle ein zugeordneter Sollwert des Umfangs ermittelt und mit dem tatsächlichen Umfang des erfassten Teilbereichs verglichen. Falls diese Abweichung zwischen Istwert und Sollwert einen Grenzwert überschreitet, wird die Position dieses Teilbereichs bei der Erzeugung des Bildstandkorrektursignals nicht berücksichtigt. Damit können ungeeignete Löcher aussortiert werden. Eine Abweichung zwischen dem ermittelten Wert und dem Sollwert des Umfangs kann sich beispielsweise durch eine Beschädigung des Randes des Perforationslochs oder durch einen im erfassten Teilbereich liegenden Fremdkörper, z.B. ein Staubpartikel oder eine Fussel, ergeben. Durch die Nichtberücksichtigung wird die Gefahr der Erzeugung eines fehlerhaften Bildstandkorrektursignals vermieden.

Es ist möglich, den Sollwerten des Umfangs einen globalen, für die gesamte Nachschlagtabelle gültigen Grenzwert oder individuelle Grenzwerte mittels der genannten oder einer zusätzlichen Nachschlagtabelle zuzuordnen.

Gemäß einer weiteren bevorzugten Ausführungsform ist die Auswerteeinheit zum Ermitteln der jeweiligen Fläche und des jeweiligen Umfangs des erfassten Teilbereichs mehrerer Perforationslöcher ausgebildet, wobei in der Auswerteeinheit eine Nachschlagtabelle gespeichert ist, in welcher einem jeweiligen Wert der Fläche ein Sollwert des Umfangs des erfassten Teilbereichs zugeordnet ist, wobei die Auswerteeinheit zum Ermitteln einer Abweichung des ermittelten Umfangs von dem zugeordneten Sollwert ausgebildet ist, und wobei die Auswerteeinheit dazu ausgebildet ist, für wenigstens einen erfassten Teilbereich mit der größten ermittelten Abweichung des Umfangs die ermittelte Position des jeweiligen Perforationsloches hinsichtlich der Erzeugung des Bildstandkorrektursignals unberücksichtigt zu lassen. Hierdurch ist es zum Beispiel möglich, auch solche Teilbereiche bzw. Teilbereichs-Positionen zu verwerfen, bei denen eine Bestimmung, ob eine ermittelte Abweichung des Umfangs einen Grenzwert überschreitet, nicht durchgeführt wurde oder eine Grenzwertüberschreitung nicht festgestellt wurde, um die Genauigkeit bei der Erzeugung des Bildstandkorrektursignals zu verbessern.

Gemäß einer anderen vorteilhaften Ausführungsform der Erfindung ist die Auswerteeinheit zum Ermitteln der Fläche und des Flächenschwerpunkts des erfassten Teilbereichs des wenigstens einen Perforationslochs ausgebildet, wobei in der Auswerteeinheit eine Nachschlagtabelle gespeichert ist, in welcher einen jeweiligen Wert der Fläche eine Sollposition des Flächenschwerpunkts des erfassten Teilbereichs zugeordnet ist, wobei die Auswerteeinheit zum Ermitteln einer Abweichung des ermittelten Flächenschwerpunkts von der zugeordneten Sollposition ausgebildet ist, und wobei die Auswerteeinheit dazu ausgebildet ist, eine ermittelte Position des erfassten Teilbereichs des jeweiligen Perforationslochs hinsichtlich der Erzeugung des Bildstandkorrektursignals unberücksichtigt zu lassen, falls für diese ermittelte Teilbereichsposition die ermittelte Abweichung des Flächenschwerpunkts einen Grenzwert überschreitet. Hierdurch ist es ebenfalls möglich, auf einfache Weise die Beschädigung von Perforationslöchern oder die Anwesenheit eines Fremdkörpers im erfassten Teilbereich des Perforationslochs festzustellen und diesen Teilbereich bei der Erzeugung des Bildstandkorrektursignals unberücksichtigt zu lassen.

Alternativ oder zusätzlich kann die Auswerteeinheit zum Ermitteln der jeweiligen Fläche und des jeweiligen Flächenschwerpunkts des erfassten Teilbereichs mehrerer Perforationslöcher ausgebildet sein, wobei in der Auswerteeinheit eine Nachschlagtabelle gespeichert ist, in welcher einen jeweiligen Wert der Fläche eine Sollposition des Flächenschwerpunkts des erfassten Teilbereichs zugeordnet ist, wobei die Auswerteeinheit zum Ermitteln einer Abweichung des ermittelten Flächenschwerpunkts von der zugeordneten Sollposition ausgebildet ist, und wobei die Auswerteeinheit dazu ausgebildet ist, für wenigstens einen erfassten Teilbereich mit der größten ermittelten Abweichung des Flächenschwerpunkts die Position des jeweiligen Perforationslochs hinsichtlich der Erzeugung des Bildstandkorrektursignals unberücksichtigt zu lassen. Auch hierdurch können zur Verbesserung der Genauigkeit solche Teilbereiche bzw. Teilbereichs-Positionen verworfen werden, bei denen die Bestimmung einer Grenzwertüberschreitung der Abweichung der Position des Flächenschwerpunkts von einer Sollposition nicht durchgeführt wurde oder eine Überschreitung nicht festgestellt wurde.

Gemäß einer anderen vorteilhaften Ausführungsform der Erfindung ist die Auswerteeinheit zum Erkennen der Teilbereiche der Perforationslöcher auf der Grundlage einer Helligkeitsverteilung des Abtastbilds ausgebildet. Dies beruht auf der Tatsache, dass die Perforationslöcher regelmäßig die Bereiche mit der größten Helligkeit im Bild sind. Auch in vollständig transparenten Bildbereichen bewirken die Übergänge Luft-Film und Film-Luft eine Reflexion von jeweils etwa 4 % des Lichts. Daher lassen sich die erfassten Teilbereiche der Perforationslöcher anhand der Helligkeitsverteilung, d.h. des Histogramms, des Abtastbildes, eindeutig identifizieren. So ist bei beidseitiger Erfassung der Perforationsreihen der Flächenanteil der erfassten Teilbereiche der Perforationslöcher am Gesamtbild nahezu konstant, so dass anhand des Flächenanteils ein Quantil festgelegt wird, dessen Helligkeitswerte den erfassten Teilbereichen der Perforationslöcher zuzuordnen ist.

Bevorzugt ist die Auswerteeinheit zum Erkennen der Teilbereiche der Perforationslöcher auf der Grundlage eines Schwellwerts der Helligkeit des Abtastbildes ausgebildet. Somit kann durch einen einfachen Schwellwertvergleich - bezogen auf die Helligkeit - ein jeweiliger Perforationsloch-Teilbereich identifiziert werden.

Der Schwellwert kann zum Beispiel aus der Helligkeitsverteilung anhand des mittleren oder des geringsten Helligkeitswerts des dem Flächenanteil der erfassten Teilbereiche zugeordneten Quantils ermittelt werden. Bei konstanten Beleuchtungsbedingungen kann auch eine Erkennung der Perforationsloch-Teilbereiche aufgrund eines festen Helligkeitsschwellwertes erfolgen, da die Perforationslöcher üblicherweise eine konstante Helligkeit aufweisen.

Weiterhin kann der Schwellwert auch durch das Minimum in der Helligkeitsverteilung definiert werden, welches sich zwischen den höchsten Helligkeitswerten, welche den Perforationslöchern zugeordnet sind, und den Helligkeitswerten, welche den vollständig transparenten Stellen im Bildbereich des Laufbildfilms zugeordnet sind, befindet.

Die Erfindung wird ferner durch ein Verfahren mit den Merkmalen des Anspruchs 15 gelöst, und insbesondere durch ein Verfahren zum optischen Abtasten eines Laufbildfilms, der in Längsrichtung eine Folge von mehreren Bildbereichen und zumindest eine Reihe von mehreren Perforationslöchern aufweist, insbesondere eines Laufbildfilms des Typs 16 mm oder 35 mm, mit den Schritten: Erfassen zumindest eines jeweiligen Bildbereichs des Laufbildfilms, Erzeugen eines entsprechenden Abtastbildes, und Erzeugen Bildstandkorrektursignals für das Abtastbild. Das Verfahren ist **dadurch gekennzeichnet, dass** das Erfassen des zumindest einen jeweiligen Bildbereichs das zusätzliche Erfassen lediglich eines jeweiligen Teilbereichs von Perforationslöchern in der Umgebung des erfassten Bildbereichs des Laufbildfilms umfasst, und dass das Bildstandkorrektursignal auf der Grundlage der wenigstens einen ermittelten Teilbereichsposition erzeugt wird.

Weitere bevorzugte Ausführungsformen der Erfindung sind in den Unteransprüchen angegeben.

Die Erfindung wird nachfolgend anhand eines Ausführungsbeispiels mit Bezug auf die Zeichnung erläutert. In dieser zeigt:
- Fig. 1: eine schematische Darstellung einer Ausführungsform eines Filmscanners; und
- Fig. 2 und 3: einen Abschnitt eines Laufbildfilms.

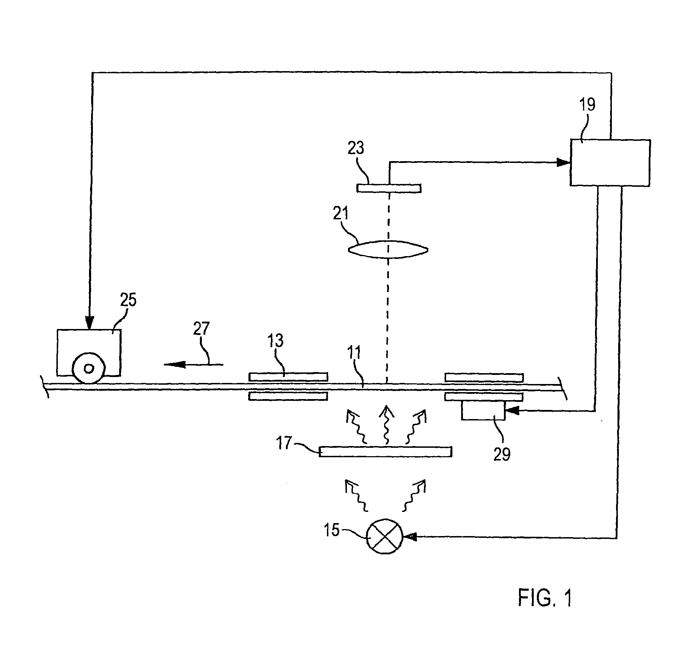

Fig. 1 illustriert den Aufbau eines Filmscanners zum optischen Abtasten eines belichteten Laufbildfilms 11, der in einer Filmbahn 13 geführt wird. Der Laufbildfilm 11 bzw. ein jeweiliger belichteter Bildbereich hiervon wird mittels einer Lichtquelle 15 und eines nachgeordneten Diffusors 17 beleuchtet. Auf der der Lichtquelle 15 gegenüberliegenden Seite des Laufbildfilms 11 ist eine Empfangsoptik 21 angeordnet, die beispielhaft als Sammellinse dargestellt ist. Die Empfangsoptik 21 bildet den abzutastenden Bildbereich des Laufbildfilms 11 auf einen optoelektronischen Bildsensor 23 ab, der beispielsweise als CCD- oder CMOS-Sensor mit einer matrixförmigen Anordnung von fotoelektrischen Empfangselementen ausgebildet ist. Die Empfangselemente erzeugen in Abhängigkeit von der Lichtbeaufschlagung einen jeweiligen Bildpunkt-Messwert, wobei der Bildsensor 23 mit einem Eingang einer Steuer- und Auswerteschaltung 19 verbunden ist.

Das optische Abtasten des Laufbildfilms 11 erfolgt dadurch, dass dieser mittels einer Antriebseinrichtung 25 bildbereichsweise entlang einer Transportrichtung 27 bewegt wird. In jeder Ruhestellung des Laufbildfilms 11 wird der von der Filmbahn 13 freigegebene Bildbereich durch entsprechende Ansteuerung der Lichtquelle 15 beleuchtet. Hierbei wird mittels des Bildsensors 23 ein Abtastbild mit einer Matrix von Bildpunkt-Messwerten erzeugt und mittels der Steuer- und Auswerteschaltung 19 ausgelesen. Alternativ ist grundsätzlich auch eine zeilenweise erfolgende Abtastung des jeweiligen Bildbereichs möglich.

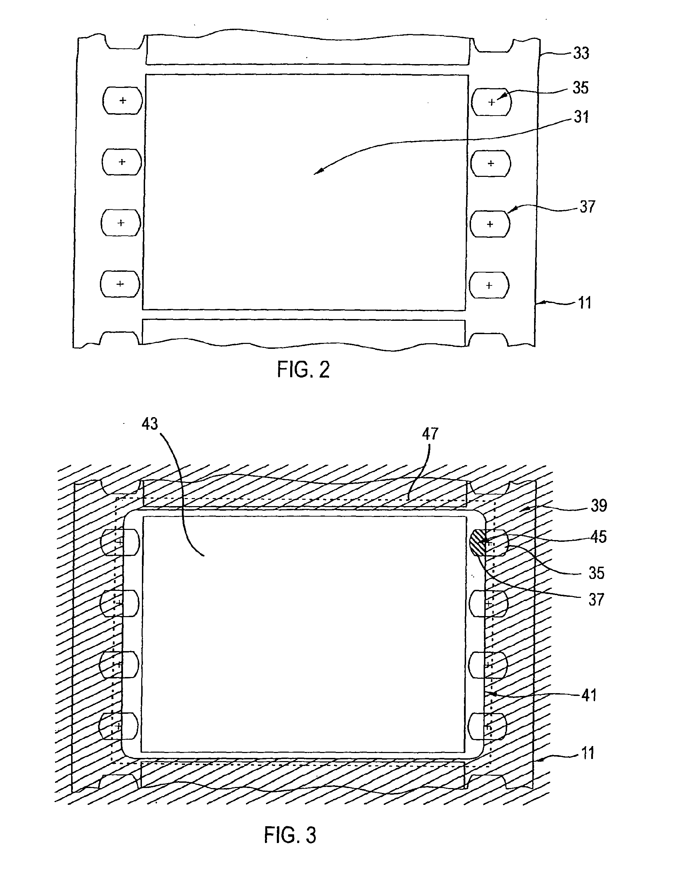

Fig. 2 zeigt einen Abschnitt des Laufbildfilms 11 mit einem Bildbereich 31. In Längsrichtung des Laufbildfilms 11 (d.h. in Laufrichtung bzw. bezogen auf die Darstellung gemäß Fig. 2 in vertikaler Richtung) ist eine Folge von mehreren derartigen Bildbereichen 31 vorgesehen. Zwischen dem jeweiligen Bildbereich 31 und jedem Längsrand 33 des Laufbildfilms 11 befindet sich eine Reihe von rund-rechteckigen Perforationslöchern 35, die jeweils durch einen Lochrand 37 begrenzt werden.

Fig. 3 zeigt den Abschnitt des Laufbildfilms 11 gemäß Fig. 2 in einer als schraffierte Fläche dargestellten Filmbühne 39, deren Öffnung 43 durch den Filmbühnenrand 41 begrenzt wird. Das gestrichelt dargestellte Sensorbildfeld 47, d.h. der maximale Bereich, der ohne Masken oder Blenden im Strahlengang vom Bildsensor 23 erfasst werden könnte, ist bei diesem Beispiel etwas größer als die Öffnung 43 der Filmbühne 39, sodass der Filmbühnenrand 41 in einem von dem Bildsensor 23 aufgenommenen Abtastbild sichtbar ist. Alternativ hierzu kann das Bildfeld 47 des Bildsensors 23 jedoch auch mit dem gezeigten Filmbühnenrand 41 übereinstimmen oder innerhalb des Filmbühnenrands 41 liegen.

Bei der Abtastung des Laufbildfilms 11 werden der jeweilige Bildbereich 31 sowie insgesamt acht Teilbereiche 45 der dem jeweiligen Bildbereich 31 seitlich benachbarten Perforationslöcher 35 erfasst, wobei die Teilbereiche 45 einerseits durch den jeweiligen Lochrand 37 und andererseits durch den Filmbühnenrand 41 (alternativ durch das Bildfeld 47 des Bildsensors 23) begrenzt sind. Einer der genannten acht Teilbereiche 45 ist in Fig. 3 schraffiert dargestellt.

Grundsätzlich können auch hier nicht dargestellte Laufbildfilme abgetastet werden, bei denen Perforationslöcher nur auf einer Seite des Bildbereichs vorgesehen sind. Die Anzahl der erfassten Teilbereiche reduziert sich in dem Fall bei gleich bleibendem Lochabstand auf vier.

Das von dem Bildsensor 23 erzeugte Abtastbild wird der Steuer- und Auswerteschaltung 19 zugeführt, um ein Bildstandkorrektursignal zu erzeugen.

Aus Fig. 3 wird deutlich, dass der Bildversatz eines jeweiligen Bildbereichs 31 in vertikaler Richtung, d.h. in der Laufrichtung des Laufbildfilms 11, direkt aus der Vertikalposition der Flächenschwerpunkte der Teilbereiche 45 bestimmt werden kann. Das Bildkorrektursignal ergibt sich beispielsweise unmittelbar aus den Abweichungen der Flächenschwerpunkte der erfassten Teilbereiche 45 der Perforationslöcher 35 von jeweils vorgegebenen Bezugs- oder Referenzpositionen. Hierbei kann für jeden Bildbereich 31 eine Mittelwertbildung über die genannten Abweichungen der Flächenschwerpunkte vorgesehen sein.

In horizontaler Richtung gemäß Fig. 3, d.h. quer zu der Laufrichtung des Laufbildfilms 11, kann der Bildversatz entsprechend aus der jeweiligen Horizontalposition der Flächenschwerpunkte bestimmt werden, wobei auch hier vorzugsweise eine Mittelwertbildung vorgesehen ist. Zwischen dem Bildversatz in horizontaler Richtung und der Verschiebung des Flächenschwerpunkts des Teilbereichs 45 in horizontaler Richtung besteht nämlich ein vorbestimmter Zusammenhang.

Besonders einfach ist die Auswertung, wenn der Bildversatz auf der Grundlage der Fläche des erfassten Teilbereichs 45 bestimmt wird. Der Zusammenhang zwischen der Fläche des Teilbereichs 45 und dem Bildversatz, d.h. der Positionsabweichung von einem Sollwert der Position des jeweiligen Perforationsloch-Teilbereichs, hängt lediglich von der Form des Perforationslochs 35 ab. Es kann daher ein formelmäßiger Zusammenhang angegeben werden. Alternativ kann eine Nachschlagtabelle erstellt werden, in der für eine Vielzahl von Werten der Fläche des Teilbereichs 45 einem jeweiligen Wert der Fläche ein Wert der Position des erfassten Teilbereichs 45 zugeordnet ist.

Zusätzlich kann in dieser Nachschlagtabelle auch eine Sollposition des jeweiligen Flächenschwerpunkts und/oder ein Sollwert des Umfangs des erfassten Teilbereichs 45 abgelegt sein. Bei der Auswertung des Abtastbildes kann dann überprüft werden, ob die aus dem Abtastbild ermittelte Position des Flächenschwerpunkts bzw. der Umfang des erfassten Teilbereichs 45 innerhalb vorbestimmter Toleranzen mit der Sollposition des Flächenschwerpunkts bzw. dem Sollwert des Umfangs übereinstimmt, die in der Nachschlagtabelle für die entsprechende Fläche eingetragen sind. Dadurch lassen sich beschädigte und/oder eingerissene Lochränder 37 oder die Erfassung eines Staubpartikels oder Fussels im erfassten Teilbereich 45 erkennen. Die betreffenden Teilbereiche 45 werden hinsichtlich der Erzeugung des Bildstandkorrektursignals für den zugeordneten Bildbereich in diesem Fall nicht berücksichtigt, wodurch eine noch höhere Genauigkeit der Bildstandkorrektur erzielt wird.

Weitere Möglichkeiten zur Auswertung des Abtastbildes wurden bereits eingangs detailliert erläutert. Insbesondere können unterschiedliche Kriterien zur Anwendung gelangen, um einzelne der erfassten Teilbereiche 45 von der Erzeugung des Bildstandkorrektursignals in vertikaler und/oder horizontaler Richtung auszunehmen.

Insgesamt wird eine elektronische Bildstandkorrektur mit hoher Genauigkeit ermöglicht. Da hierfür ein lediglich geringfügig vergrößertes Bildfeld 47 des Bildsensors 23 erforderlich ist, ergibt sich ein kostengünstiger Aufbau des Filmscanners. Überdies wird ein unerwünschter zusätzlicher Streulichteintrag vermieden, der entstehen könnte, wenn der Bildsensor 23 und die Empfangsoptik 21 für die Erfassung der vollständigen Perforationslöcher 35 ausgelegt wären.

### Bezugszeichenliste

- 11: Luftbildfilm
- 13: Filmbahn
- 15: Lichtquelle
- 17: Diffusor
- 19: Steuer- und Auswerteschaltung
- 21: Empfangsoptik
- 23: Bildsensor
- 25: Antriebseinrichtung
- 27: Transportrichtung
- 31: Bildbereich
- 33: Längsrand
- 35: Perforationsloch
- 37: Lochrand
- 39: Filmbühne
- 41: Filmbühnenrand
- 43: Öffnung
- 45: Teilbereich
- 47: Sensorbildfeld

## Patentansprüche

1. Filmscanner zum optischen Abtasten eines Laufbildfilms (11), der in Längsrichtung (27) eine Folge von mehreren Bildbereichen (31) und zumindest eine Reihe von mehreren Perforationslöchern (35) aufweist, insbesondere eines Laufbildfilms des Typs 16 mm oder 35 mm,
mit einem Bildsensor (23) zum Erfassen zumindest eines jeweiligen Bildbereichs (31) des Laufbildfilms (11), um ein entsprechendes Abtastbild zu erzeugen, und mit einer Auswerteeinheit (19) zum Auswerten des Abtastbildes, um ein Bildstandkorrektursignal für das Abtastbild zu erzeugen;
**dadurch gekennzeichnet,**
**dass** der Bildsensor (23) zum zusätzlichen Erfassen lediglich eines jeweiligen Teilbereichs (45) von Perforationslöchern (35) in der Umgebung des erfassten Bildbereichs (31) des Laufbildfilms (11) ausgebildet ist, wobei die Auswerteeinheit (19) dazu ausgebildet ist, eine Position des erfassten Teilbereichs (45) wenigstens eines Perforationslochs (35) zu ermitteln und das Bildstandkorrektursignal auf der Grundlage der wenigstens einen ermittelten Teilbereichs-Position zu erzeugen.

2. Filmscanner nach Anspruch 1,
**dadurch gekennzeichnet,**
**dass** der erfasste Teilbereich (45) der Perforationslöcher (35) durch das Bildfeld des Bildsensors (23) begrenzt ist.

3. Filmscanner nach Anspruch 1 oder 2,
**dadurch gekennzeichnet,**
**dass** der erfasste Teilbereich der Perforationslöcher durch eine Maske begrenzt ist, insbesondere durch eine Filmbühne (39) des Filmscanners.

4. Filmscanner nach einem der vorhergehenden Ansprüche,
**dadurch gekennzeichnet,**
**dass** die Auswerteeinheit (19) dazu ausgebildet ist, die jeweilige Position des erfassten Teilbereichs (45) mehrerer Perforationslöcher (35) zu ermitteln und wenigstens einen Extremwert der ermittelten mehreren Positionen hinsichtlich der Erzeugung des Bildstandkorrektursignals unberücksichtigt zu lassen.

5. Filmscanner nach einem der vorhergehenden Ansprüche,
**dadurch gekennzeichnet,**
**dass** die Auswerteeinheit (19) dazu ausgebildet ist, auf der Grundlage der wenigstens einen ermittelten Teilbereichs-Position eine Positionsabweichung von einem Sollwert der Position des jeweiligen Perforationsloch-Teilbereichs (45) zu ermitteln, wobei das Bildstandkorrektursignal der ermittelten Positionsabweichung oder einer Kombination mehrerer der für einen Bildbereich ermittelten Positionsabweichungen entspricht.

6. Filmscanner nach einem der vorhergehenden Ansprüche,
**dadurch gekennzeichnet,**
**dass** die Auswerteeinheit (19) dazu ausgebildet ist, die Position des erfassten Teilbereichs (45) des jeweiligen Perforationsloches (35) auf der Grundlage der Position des Flächenschwerpunkts des erfassten Teilbereichs (45) zu ermitteln.

7. Filmscanner nach einem der vorhergehenden Ansprüche,
**dadurch gekennzeichnet,**
**dass** die Auswerteeinheit (19) zum Ermitteln der Fläche des erfassten Teilbereichs (45) des wenigstens einen Perforationslochs (35) ausgebildet ist, wobei die Auswerteeinheit (19) zum Ermitteln der Position des erfassten Teilbereichs (45) des wenigstens einen Perforationslochs (35) auf der Grundlage der Fläche des erfassten Teilbereichs (45) ausgebildet ist.

8. Filmscanner nach Anspruch 7,
**dadurch gekennzeichnet,**
**dass** in der Auswerteeinheit (19) eine Nachschlagtabelle gespeichert ist, in welcher für eine Vielzahl von Werten der Fläche des erfassten Teilbereichs (45) einem jeweiligen Wert der Fläche ein Wert der Position des erfassten Teilbereichs (45) zugeordnet ist.

9. Filmscanner nach einem der vorhergehenden Ansprüche,
**dadurch gekennzeichnet,**
**dass** die Auswerteeinheit (19) zum Ermitteln der Fläche und des Umfangs des erfassten Teilbereichs (45) des wenigstens einen Perforationslochs (35) ausgebildet ist, wobei in der Auswerteeinheit (19) eine Nachschlagtabelle gespeichert ist, in welcher einem jeweiligen Wert der Fläche ein Sollwert des Umfangs des erfassten Teilbereichs (45) zugeordnet ist, wobei die Auswerteeinheit (19) zum Ermitteln einer Abweichung des ermittelten Umfangs von dem zugeordneten Sollwert ausgebildet ist, und wobei die Auswerteeinheit dazu ausgebildet ist, eine ermittelte Position des erfassten Teilbereichs (45) des jeweiligen Perforationslochs (35) hinsichtlich der Erzeugung des Bildstandkorrektursignals unberücksichtigt zu lassen, falls für diese ermittelte Teilbereichs-Position die ermittelte Abweichung des Umfangs einen Grenzwert überschreitet.

10. Filmscanner nach einem der vorhergehenden Ansprüche,
**dadurch gekennzeichnet,**
**dass** die Auswerteeinheit (19) zum Ermitteln der jeweiligen Fläche und des jeweiligen Umfangs des erfassten Teilbereichs (45) mehrerer Perforationslöcher (35) ausgebildet ist, wobei in der Auswerteeinheit (19) eine Nachschlagtabelle gespeichert ist, in welcher einem jeweiligen Wert der Fläche ein Sollwert des Umfangs des erfassten Teilbereichs (45) zugeordnet ist, wobei die Auswerteeinheit (19) zum Ermitteln einer Abweichung des ermittelten Umfangs von dem zugeordneten Sollwert ausgebildet ist, und wobei die Auswerteeinheit (19) dazu ausgebildet ist, für wenigstens einen erfassten Teilbereich (45) mit der größten ermittelten Abweichung des Umfangs die ermittelte Position des jeweiligen Perforationsloch-Teilbereichs (45) hinsichtlich der Erzeugung des Bildstandkorrektursignals unberücksichtigt zu lassen.

11. Filmscanner nach einem der vorhergehenden Ansprüche,
**dadurch gekennzeichnet,**
**dass** die Auswerteeinheit (19) zum Ermitteln der Fläche und des Flächenschwerpunkts des erfassten Teilbereichs (45) des wenigstens einen Perforationslochs (35) ausgebildet ist, wobei in der Auswerteeinheit (19) eine Nachschlagtabelle gespeichert ist, in welcher einem jeweiligen Wert der Fläche eine Sollposition des Flächenschwerpunkts des erfassten Teilbereichs (45) zugeordnet ist, wobei die Auswerteeinheit (19) zum Ermitteln einer Abweichung des ermittelten Flächenschwerpunkts von der zugeordneten Sollposition ausgebildet ist, und wobei die Auswerteeinheit (19) dazu ausgebildet ist, eine ermittelte Position des erfassten Teilbereichs (45) des jeweiligen Perforationslochs (35) hinsichtlich der Erzeugung des Bildstandkorrektursignals unberücksichtigt zu lassen, falls für diese ermittelte Teilbereichs-Position die ermittelte Abweichung des Flächenschwerpunkts einen Grenzwert überschreitet.

12. Filmscanner nach einem der vorhergehenden Ansprüche,
**dadurch gekennzeichnet,**
**dass** die Auswerteeinheit (19) zum Ermitteln der jeweiligen Fläche und des jeweiligen Flächenschwerpunkts des erfassten Teilbereichs (45) mehrerer Perforationslöcher (35) ausgebildet ist, wobei in der Auswerteeinheit (19) eine Nachschlagtabelle gespeichert ist, in welcher einem jeweiligen Wert der Fläche eine Sollposition des Flächenschwerpunkts des erfassten Teilbereichs (45) zugeordnet ist, wobei die Auswerteeinheit (19) zum Ermitteln einer Abweichung des ermittelten Flächenschwerpunkts von der zugeordneten Sollposition ausgebildet ist, und wobei die Auswerteeinheit (19) dazu ausgebildet ist, für wenigstens einen erfassten Teilbereich mit der größten ermittelten Abweichung des Flächenschwerpunkts die ermittelte Position des jeweiligen Perforationsloch-Teilbereichs (45) hinsichtlich der Erzeugung des Bildstandkorrektursignals unberücksichtigt zu lassen.

13. Filmscanner nach einem der vorhergehenden Ansprüche,
**dadurch gekennzeichnet,**
**dass** die Auswerteeinheit zum Erkennen der Teilbereiche (45) der Perforationslöcher (35) auf der Grundlage einer Helligkeitsverteilung des Abtastbilds ausgebildet ist.

14. Filmscanner nach einem der vorhergehenden Ansprüche,
**dadurch gekennzeichnet,**
**dass** die Auswerteeinheit zum Erkennen der Teilbereiche der Perforationslöcher auf der Grundlage eines Schwellwerts der Helligkeit des Abtastbilds ausgebildet ist.

15. Verfahren zum optischen Abtasten eines Laufbildfilms (11), der in Längsrichtung (27) eine Folge von mehreren Bildbereichen und zumindest eine Reihe von mehreren Perforationslöchern (35) aufweist, insbesondere eines Laufbildfilms (11) des Typs 16 mm oder 35 mm, mit den Schritten:
Erfassen zumindest eines jeweiligen Bildbereichs (31) des Laufbildfilms (11),
Erzeugen eines entsprechenden Abtastbildes, und
Erzeugen eines Bildstandkorrektursignals für das Abtastbild,
**dadurch gekennzeichnet,**
**dass** das Erfassen des zumindest einen jeweiligen Bildbereichs (31) das zusätzliche Erfassen lediglich eines jeweiligen Teilbereichs (45) von Perforationslöchern (35) in der Umgebung des erfassten Bildbereichs (31) des Laufbildfilms (11) umfasst, und
**dass** das Bildstandkorrektursignal auf der Grundlage der wenigstens einen ermittelten Teilbereichs-Position erzeugt wird.
